# EUROPÄISCHE PATENTSCHRIFT

(11) **EP 3 006 724 B1**
(45) Veröffentlichungstag und Bekanntmachung des Hinweises auf die Patenterteilung: **05.06.2024**
(21) Anmeldenummer: 15001761.4
(22) Anmeldetag: 15.06.2015
(51) Int. Cl.: F02N 11/08, B60K 37/06, B60K 35/00, B60W 30/18

(54) **VORRICHTUNG UND VERFAHREN ZUR UNTERSTÜTZUNG EINES FAHRERS EINES FAHRZEUGS, INSBESONDERE EINES NUTZFAHRZEUGS**
DEVICE AND METHOD FOR SUPPORTING A DRIVER OF A VEHICLE, IN PARTICULAR A COMMERCIAL VEHICLE
PROCEDE ET DISPOSITIF D'ASSISTANCE A UN CONDUCTEUR D'UN VEHICULE AUTOMOBILE, EN PARTICULIER UN VEHICULE UTILITAIRE

(30) Priorität: 10.10.2014 DE 102014015096
(43) Veröffentlichungstag der Anmeldung: 13.04.2016
(73) Patentinhaber: MAN Truck & Bus SE, 80995 München (DE)
(72) Erfinder: Schröppel, Wolfgang, 90530 Wendelstein (DE)
(74) Vertreter: Liebl, Thomas

(56) Entgegenhaltungen:
- DE-A1-102010 061 832
- DE-A1-102012 002 230
- DE-A1-102012 007 573
- DE-A1-102012 210 524
- GB-A- 2 427 655
- US-A1- 2002 183 917

## Beschreibung

Die Erfindung betrifft eine Vorrichtung zur Unterstützung eines Fahrers eines Fahrzeugs, insbesondere eines Nutzfahrzeugs, nach dem Oberbegriff des Patentanspruches 1, ein entsprechendes Verfahren zur Unterstützung eines Fahrers eines Fahrzeugs, insbesondere eines Nutzfahrzeugs, sowie ein Fahrzeug, insbesondere ein Nutzfahrzeug, mit einer solchen Vorrichtung.

Es ist bekannt, bei Fahrzeugen ein sogenanntes Start-Stopp-System vorzusehen, mittels dem bei einem Anhalten des fahrenden Fahrzeugs eine, eine Antriebseinrichtung des Fahrzeugs ausbildende Brennkraftmaschine selbsttätig bzw. automatisch abgeschaltet wird. Das selbsttätige Abschalten der Brennkraftmaschine erfolgt dabei üblicherweise in Abhängigkeit von einer Vielzahl von Parametern. Beispielsweise wird die Brennkraftmaschine häufig nicht abgeschaltet, wenn die Betriebstemperatur der Brennkraftmaschine oder die gewünschte Innenraumtemperatur des Fahrzeugs noch nicht erreicht ist. Ebenso wird die Brennkraftmaschine regelmäßig auch nicht abgeschaltet, wenn beispielsweise die Umgebungstemperatur zu hoch oder zu niedrig ist, die Fahrbahn ein zu starkes Gefälle bzw. eine zu starke Steigung aufweist oder eine Starterbatterie des Fahrzeugs nicht ausreichend geladen ist. Sofern die Brennkraftmaschine des Fahrzeugs mittels des Start-Stopp-Systems selbsttätig abgeschaltet wurde, wird die Brennkraftmaschine üblicherweise mittels einer durch einen Fahrer des Fahrzeugs betätigbaren Starteinrichtung des Start-Stopp-Systems wieder gestartet. Bei manuell betätigbaren Fahrzeuggetrieben ist diese Starteinrichtung häufig das Kupplungspedal des Fahrzeugs, wodurch bei einer Betätigung des Kupplungspedals die Brennkraftmaschine des Fahrzeugs wieder gestartet wird. Bei automatisiert betätigbaren Fahrzeuggetrieben bildet häufig ein Bremspedal des Fahrzeugs die Starteinrichtung aus, so dass bei einer Betätigung des Bremspedals das Fahrzeug wieder gestartet wird.

Des Weiteren sind die bekannten Start-Stopp-Systeme bzw. Start-Stopp-Einrichtungen häufig derart ausgebildet, dass sie nach jedem Start der Brennkraftmaschine des Fahrzeugs selbsttätig bzw. automatisch aktiviert werden. Die Start-Stopp-Systeme weisen daher üblicherweise eine durch den Fahrer betätigbare Ein- und Ausschalttaste auf, durch deren Betätigung das aktivierte Start-Stopp-System deaktiviert werden kann. Sofern das Start-Stopp-System deaktiviert ist, kann es dann durch erneute Betätigung der Ein- und Ausschalttaste wieder aktiviert werden. Zudem sind auch Start-Stopp-Systeme bekannt, bei denen das selbsttätige Abschalten der Brennkraftmaschine in Abhängigkeit von einem beim Anhalten des Fahrzeugs durch den Fahrer ausgeübten Druck auf das Bremspedal erfolgt. Sofern der Druck auf das Bremspedal dabei geringer ist als eine definierter Schwellwert, wird die Brennkraftmaschine nicht selbsttätig mittels des Start-Stopp-Systems abgeschaltet. Sofern der Druck auf das Bremspedal größer ist als der definierte Schwellwert, wird die Brennkraftmaschine abgeschaltet.

Häufig gibt es jedoch Situationen bzw. Verkehrssituationen, bei denen die selbsttätige Abschaltung der Brennkraftmaschine durch das Start-Stopp-System vom Fahrer nicht gewünscht ist und die Beeinflussung der selbsttätigen Abschaltung der Brennkraftmaschine durch den Fahrer, beispielsweise durch den Druck auf das Bremspedal oder die Betätigung des Kupplungspedals, erschwert ist. Derartige Situationen treten regelmäßig dann auf, wenn das Fahrzeug lediglich für einen kurzen Zeitraum angehalten werden muss, beispielsweise bei einem Anhalten des Fahrzeugs an einem Parkscheinautomaten im Ein- oder Ausfahrbereich eines Parkhauses bzw. einer Tiefgarage oder bei einem Vorbeilassen vom Gegenverkehr und von Fußgängern/Radfahrern beim Abbiegen nach links. Weitere derartige Verkehrssituationen sind beispielsweise das Vorbeilassen von Fußgängern/Radfahrern beim Abbiegen nach rechts, Lichtsignalanlagen bzw. Ampeln mit kurzen Umschaltzeiten oder Kreuzungen, bei denen der Verkehr mit Verkehrszeichen oder durch die "rechts vor links"-Regel geregelt wird. Das Start-Stopp-System wird bei diesen Verkehrssituationen häufig mittels der Ein- und Ausschalttaste deaktiviert. Jedoch wird es von Fahrern regelmäßig vergessen, die Ein- und Ausschalttaste nach dem kurzzeitigen Anhalten des Fahrzeugs erneut zu betätigen, um das Start-Stopp-System wieder zu aktivieren.

Aus der DE 10 2012 002230 A1 ist ein Verfahren zum Betrieb eines Kraftfahrzeugsystems mit einem Verbrennungsmotor, welches eine Stopp/Start-Automatik zur automatisierten Ausführung von Motorstopps und -starts des Verbrennungsmotors in Abhängigkeit von messbaren Parametern aufweist, bekannt. Die automatisierte Ausführung von Motorstopps wird durch eine Betätigung einer Bedienvorrichtung durch einen Fahrer unterbunden, wobei durch die Betätigung der Bedienvorrichtung die automatisierte Ausführung von Motorstarts nicht unterbunden wird, und wobei die Unterbindung der automatisierten Ausführung der Motorstopps für eine festlegbare Zeit nach der Betätigung der Bedienvorrichtung erfolgt.

Aufgabe der Erfindung ist es, eine Vorrichtung und ein Verfahren zur Unterstützung eines Fahrers eines Fahrzeugs, insbesondere eines Nutzfahrzeugs, bereitzustellen, mittels denen die Unterstützung des Fahrers auf einfache und komfortable Weise erweitert und/oder verbessert wird.

Diese Aufgabe wird durch die Merkmale der unabhängigen Ansprüche gelöst. Bevorzugte Weiterbildungen sind in den Unteransprüchen offenbart.

Die Erfindung betrifft eine Vorrichtung zur Unterstützung eines Fahrers eines Fahrzeugs, insbesondere eines Nutzfahrzeugs, wobei eine Start-Stopp-Einrichtung vorgesehen ist, mittels der bei einem Anhalten des fahrenden Fahrzeugs eine, eine Antriebseinrichtung ausbildende Brennkraftmaschine selbsttätig bzw. automatisch abgeschaltet werden kann, wobei die Start-Stopp-Einrichtung eine durch den Fahrer betätigbare Starteinrichtung aufweist, durch deren Betätigung die abgeschaltete Brennkraftmaschine wieder gestartet werden kann. Erfindungsgemäß ist eine durch den Fahrer betätigbare Deaktivierungs-Einrichtung vorgesehen, durch deren Betätigung die Start-Stopp-Einrichtung für ein definiertes Deaktivierungs-Zeitintervall deaktiviert werden kann, wobei nach Ablauf des Deaktivierungs-Zeitintervalls die Start-Stopp-Einrichtung wieder selbsttätig bzw. automatisch aktiviert werden kann.

Auf diese Weise wird die Unterstützung des Fahrers auf einfache und komfortable Weise erweitert bzw. verbessert, da der Fahrer lediglich die Deaktivierungs-Einrichtung betätigen muss, wenn er ein selbsttätiges Abschalten der Brennkraftmaschine während des kurzzeitigen Anhaltens des Fahrzeugs verhindern will bzw. nicht wünscht. Sofern das Deaktivierungs-Zeitintervall abgelaufen ist, wird die Start-Stopp-Einrichtung dann wieder selbsttätig aktiviert, ohne dass eine erneute Betätigung durch den Fahrer erfolgen muss. Auch das in der Praxis häufig festgestellte, unbeabsichtigte Verhalten von Fahrern, dass die Start-Stopp-Einrichtung nach einer Deaktivierung der Start-Stopp-Einrichtung mittels der bereits genannten Ein- und Ausschalttaste nicht wieder aktiviert wird, wird dadurch zuverlässig verhindert. So wird der Zeitraum, in dem die Start-Stopp-Einrichtung aktiviert ist, vergrößert und die Start-Stopp-Einrichtung effektiv genutzt.

Bevorzugt dauert das Deaktivierungs-Zeitintervall in etwa 3 bis 10 Sekunden, insbesondere in etwa 5 Sekunden, an. Ein derart ausgebildetes Zeitintervall dauert üblicherweise länger an als die Verkehrssituationen, bei denen das Fahrzeug kurzzeitig angehalten werden muss und ein Abschalten der Brennkraftmaschine nicht erwünscht ist. Zudem wird die Start-Stopp-Einrichtung durch ein derartiges Zeitintervall auch nicht zu lange deaktiviert, wodurch die Start-Stopp-Einrichtung weiterhin effektiv genutzt wird.

Erfindungsgemäß ist eine durch den Fahrer betätigbare Einstelleinrichtung vorgesehen, mittels der das Deaktivierungs-Zeitintervall durch den Fahrer eingestellt werden kann, wobei bevorzugt vorgesehen ist, dass die Einstelleinrichtung einem Lenkrad des Fahrzeugs zugeordnet ist. Auf diese Weise ist die Deaktivierungs-Einrichtung besonders flexibel, da der Fahrer das Deaktivierungs-Zeitintervall wie gewünscht bzw. nach seinen Bedürfnissen einstellen kann. Die Zuordnung der Einstelleinrichtung zum Lenkrad des Fahrzeugs ermöglicht dabei eine besonders komfortable und verkehrssichere Betätigung der Einstelleinrichtung.

Vorzugsweise ist der mittels der Einstelleinrichtung einstellbare Wert für das Deaktivierungs-Zeitintervall durch einen definierten Maximalwert, insbesondere in etwa 10 Sekunden, begrenzt. Weiter bevorzugt ist der mittels der Einstelleinrichtung einstellbare Wert für das Deaktivierungs-Zeitintervall auch durch einen definierten Minimalwert, insbesondere in etwa 3 Sekunden, begrenzt. Durch derartige Begrenzungen wird sichergestellt, dass die Start-Stopp-Einrichtung und die Deaktivierungs-Einrichtung effektiv und funktionsoptimiert verwendet werden.

Bevorzugt weist die Deaktivierungs-Einrichtung eine, insbesondere manuell, durch den Fahrer betätigbare Betätigungseinrichtung, insbesondere einen Schalter oder eine Taste, auf, mittels der die Deaktivierungs-Einrichtung betätigt werden kann, wobei bevorzugt vorgesehen ist, dass die Betätigungseinrichtung einem Lenkrad des Fahrzeugs zugeordnet ist. Mittels einer derartigen Betätigungseinrichtung kann die Deaktivierungs-Einrichtung auf einfache, zuverlässige und verkehrssichere Weise betätigt werden.

Vorzugsweise ist zudem eine durch den Fahrer, insbesondere manuell, betätigbare Betätigungseinrichtung, insbesondere eine Taste und/oder ein Schalter, vorgesehen, mittels der die Deaktivierungs-Einrichtung deaktiviert und aktiviert werden kann, wobei bevorzugt vorgesehen ist, dass die Betätigungseinrichtung einem Lenkrad des Fahrzeugs zugeordnet ist. Auf diese Weise wird eine unbeabsichtigte Betätigung der Deaktivierungs-Einrichtung zuverlässig verhindert, wenn der Fahrer die Deaktivierungs-Einrichtung nicht verwenden will.

Zur Lösung der bereits genannten Aufgabe wird ferner ein Verfahren zur Unterstützung eines Fahrers eines Fahrzeugs, insbesondere eines Nutzfahrzeugs, beansprucht, wobei eine Start-Stopp-Einrichtung vorgesehen ist, mittels der bei einem Anhalten des fahrenden Fahrzeugs eine, eine Antriebseinrichtung des Fahrzeugs ausbildende Brennkraftmaschine selbsttätig bzw. automatisch abgeschaltet wird, wobei die Start-Stopp-Einrichtung eine durch den Fahrer betätigbare Starteinrichtung aufweist, durch deren Betätigung die abgeschaltete Brennkraftmaschine wieder gestartet wird. Erfindungsgemäß ist eine durch den Fahrer betätigbare Deaktivierungs-Einrichtung vorgesehen, durch deren Betätigung die Start-Stopp-Einrichtung für ein definiertes Deaktivierungs-Zeitintervall deaktiviert wird, wobei nach Ablauf des Deaktivierungs-Zeitintervalls die Start-Stopp-Einrichtung wieder selbsttätig bzw. automatisch aktiviert wird.

Die sich aus der erfindungsgemäßen Verfahrensführung ergebenden Vorteile sind identisch mit den bereits gewürdigten Vorteilen der erfindungsgemäßen Vorrichtung, so dass diese an dieser Stelle nicht wiederholt werden.

Des Weiteren wird auch ein Fahrzeug, insbesondere ein Nutzfahrzeug, mit der erfindungsgemäßen Vorrichtung und/oder zur Durchführung des erfindungsgemäßen Verfahrens beansprucht. Die sich daraus ergebenden Vorteile sind ebenfalls identisch mit den bereits gewürdigten Vorteilen der erfindungsgemäßen Vorrichtung und werden an dieser Stelle ebenfalls nicht wiederholt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Perspektivdarstellung ein Fahrerhauses eines Lastkraftwagens von Innen;
- Fig. 2: ein Blockschaltdiagramm, anhand dem der Aufbau der erfindungsgemäßen Vorrichtung erläutert wird
- Fig. 3: ein Flussdiagramm, anhand dem der Ablauf des erfindungsgemäßen Vefahrens erläutert wird.

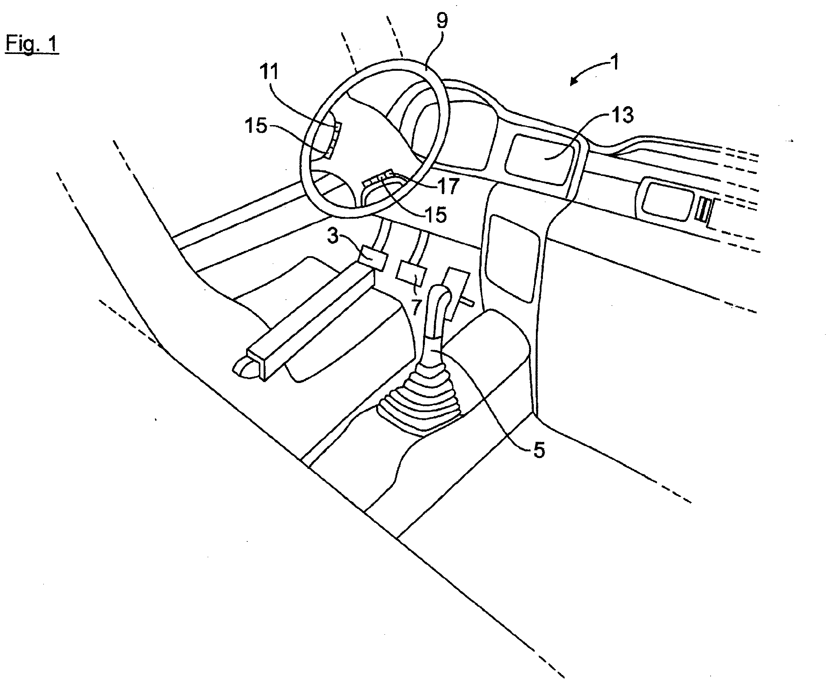

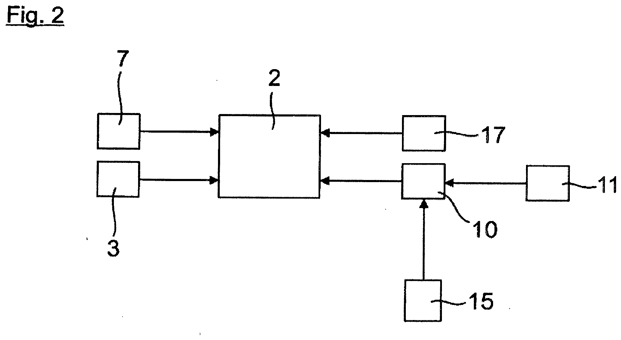

In Fig. 1 ist das ein Fahrerhaus 1 eines als Lastkraftwagen ausgebildeten Fahrzeugs von Innen gezeigt. Der Lastkraftwagen weist hier beispielhaft ein in den Figuren nicht gezeigtes, manuell betätigbares Getriebe auf. In Fig. 1 sind ein Kupplungspedal 3 und ein Schalthebel 5 zur manuellen Betätigung dieses Getriebes erkennbar. Der Lastkraftwagen weist weiter auch eine Start-Stopp-Einrichtung 2 (Fig. 2) auf, mittels der bei einem Anhalten des fahrenden Lastkraftwagens eine, eine Antriebseinrichtung des Lastkraftwagens ausbildende Brennkraftmaschine selbsttätig bzw. automatisch abgeschaltet wird. Die Abschaltung der Brennkraftmaschine erfolgt hier beispielhaft dann, wenn in dem manuell betätigbaren Getriebe kein Gang eingelegt ist und das Kupplungspedal 3 nicht gedrückt wird. Das Abschalten der Brennkraftmaschine ist hier zudem auch von mehreren Parametern, beispielsweise von der Temperatur der Brennkraftmaschine des Lastkraftwagens, von der Umgebungstemperatur und vom Zustand einer Starterbatterie des Fahrzeugs, abhängig.

Des Weiteren kann die Start-Stopp-Einrichtung 2 hier auch mittels des Bremspedals 7 gesteuert werden kann. Sofern beim Anhalten des Lastkraftwagens ein geringerer Druck als ein definierter Druck-Schwellwert auf das Bremspedal 7 ausgeübt wird, wird die Brennkraftmaschine des Lastkraftwagens dabei nicht selbstständig mittels der Start-Stopp-Einrichtung 2 abgeschaltet. Sofern ein größerer Druck als der Druck-Schwellwert auf das Bremspedal 7 ausgeübt wird, wird die Brennkraftmaschine mittels der Start-Stopp-Einrichtung 2 selbsttätig bzw. automatisch abgeschaltet.

Wurde die Brennkraftmaschine mittels der Start-Stopp-Einrichtung 2 selbsttätig abgeschaltet, kann die Brennkraftmaschine des Lastkraftwagens hier beispielhaft durch Betätigung des Kupplungspedals 3 wieder gestartet werden. Das Kupplungspedal 3 bildet hier somit eine Starteinrichtung zum erneuten Starten der Brennkraftmaschine des Lastkraftwagens aus.

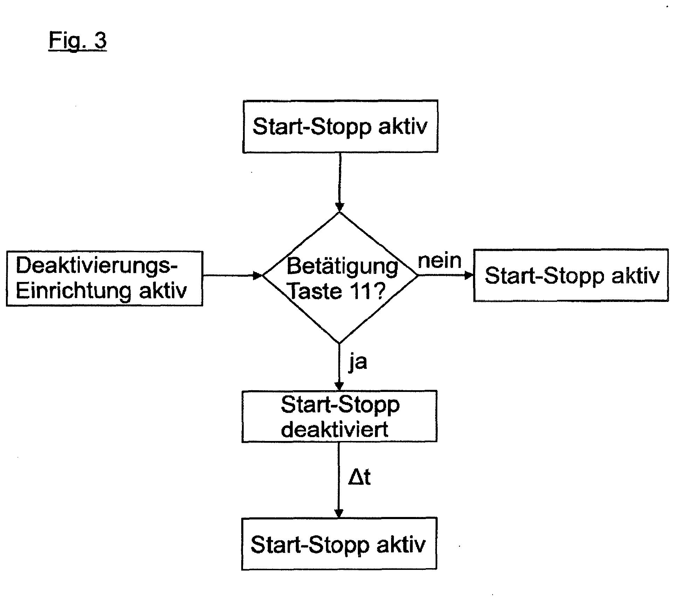

Wie in Fig. 1 weiter gezeigt ist, weist der Lastkraftwagen ein Lenkrad 9 auf, das mehrere Tasten aufweist, mittels denen mehrere Funktionen des Lastkraftwagens durch den Fahrer betätigt werden können. Mittels einer Taste 11 des Lenkrads 9 wird dabei eine Deaktivierungs-Einrichtung 10 (Fig. 2) des Lastkraftwagens betätigt, durch deren Betätigung die Start-Stopp-Einrichtung 2 für ein definiertes Deaktivierungs-Zeitintervall Δt (Fig. 3) deaktiviert wird. Nach Ablauf des Deaktivierungs-Zeitintervalls Δt wird die Start-Stopp-Einrichtung 2 dann wieder selbsttätig bzw. automatisch aktiviert. Auf diese Weise kann der Fahrer des Lastkraftwagens in Situationen, in denen er eine selbsttätige Abschaltung der Brennkraftmaschine des Lastkraftwagens mittels der Start-Stopp-Einrichtung 2 kurzfristig nicht wünscht, die Start-Stopp-Einrichtung 2 durch Betätigung der Taste 11 deaktivieren.

Des Weiteren kann der Fahrer des Lastkraftwagens hier beispielhaft auch mittels eines an einem Bildschirm 13 des Lastkraftwagens angezeigten Bedienmenüs auch das Deaktivierungs-Zeitintervall Δt der Deaktivierungs-Einrichtung 10 nach seinen Bedürfnissen bzw. wie gewünscht einstellen. Die Bedienung des Bedienmenüs erfolgt hier beispielhaft mittels Tasten 15 des Lenkrads 9. Der einstellbare Wert für das Deaktivierungs-Zeitintervall Δt ist hier durch einen definierten Maximalwert, hier in etwa 10 Sekunden, und durch einen definierten Minimalwert, hier in etwa 3 Sekunden, begrenzt. Mittels des Bedienmenüs des Bildschirms 13 kann hier zudem auch die Deaktivierungs-Einrichtung 10 des Lastkraftwagens dauerhaft aktiviert und deaktiviert werden. Des Weiteren weist das Lenkrad 9 hier eine Ein- und Ausschalttaste 17 auf, durch deren Betätigung auch die Start-Stopp-Einrichtung 2 des Lastkraftwagens dauerhaft aktiviert und deaktiviert werden kann.

In Fig. 2 ist der Aufbau der erfindungsgemäßen Vorrichtung nochmals zusammenfassend gezeigt. Daraus geht hervor, dass das Bremspedal 7, das Kupplungspedal 3, die Taste 17 und die Deaktivierungs-Einrichtung 10 signaltechnisch mit der Start-Stopp-Einrichtung 2 verbunden sind. Zudem sind die Tasten 15 über das Bedienmenü des Bildschirms 13 und die Taste 11 signaltechnisch mit der Deaktivierungs-Einrichtung 10 verbunden.

In Fig. 3 ist der Ablauf des erfindungsgemäßen Verfahrens nochmals zusammenfassend gezeigt. Sofern die Start-Stopp-Einrichtung 2 und die Deaktivierungs-Einrichtung 10 aktiviert sind, bleibt die Start-Stopp-Einrichtung 2 aktiviert, wenn die Taste 11 zur Betätigung der Deaktivierungs-Einrichtung 10 nicht betätigt wird. Sofern die Taste 11 betätigt wird, wird die Start-Stopp-Einrichtung 2 für das definierte Deaktivierungs-Zeitintervall Δt deaktiviert. Nach Ablauf des Deaktivierungs-Zeitintervalls Δt wird die Start-Stopp-Einrichtung 2 dann wieder selbsttätig bzw. automatisch aktiviert.

### Bezugszeichen

- 1: Fahrerhaus
- 2: Start-Stopp-Einrichtung
- 3: Kupplungspedal
- 5: Schalthebel
- 7: Bremspedal
- 9: Lenkrad
- 10: Deaktivierungs-Einrichtung
- 11: Taste
- 13: Bildschirm
- 15: Taste
- 17: Taste
- Δt: Zeitintervall

## Patentansprüche

1. Vorrichtung zur Unterstützung eines Fahrers eines Fahrzeugs, insbesondere eines Nutzfahrzeugs, wobei eine Start-Stopp-Einrichtung (2) vorgesehen ist, mittels der bei einem Anhalten des fahrenden Fahrzeugs eine, eine Antriebseinrichtung des Fahrzeugs ausbildende Brennkraftmaschine selbsttätig abschaltbar ist, wobei die Start-Stopp-Einrichtung (2) eine durch den Fahrer betätigbare Starteinrichtung (3) aufweist, durch deren Betätigung die abgeschaltete Brennkraftmaschine wieder startbar ist, wobei eine durch den Fahrer betätigbare Deaktivierungs-Einrichtung (10) vorgesehen ist, durch deren Betätigung die Start-Stopp-Einrichtung (2) für ein definiertes Deaktivierungs-Zeitintervall (Δt) deaktivierbar ist, wobei nach Ablauf des Deaktivierungs-Zeitintervalls (Δt) die Start-Stopp-Einrichtung (2) wieder selbsttätig aktivierbar ist, **dadurch gekennzeichnet, dass** eine durch den Fahrer betätigbare Einstelleinrichtung vorgesehen ist, mittels der das Deaktivierungs-Zeitintervall (Δt) durch den Fahrer einstellbar ist.

2. Vorrichtung nach Anspruch 1, **dadurch gekennzeichnet, dass** das Deaktivierungs-Zeitintervall (Δt) in etwa 3 bis 10 Sekunden, insbesondere in etwa 5 Sekunden, andauert.

3. Vorrichtung nach Anspruch 1 oder 2, **dadurch gekennzeichnet, dass** die Einstelleinrichtung (13) Tasten (15) an einem Lenkrad (7) des Fahrzeugs zugeordnet ist, mit denen der Fahrer ein an einem Bildschirm (13) des Fahrzeugs angezeigtes Bedienmenü bedient. ist

4. Vorrichtung nach Anspruch 3, **dadurch gekennzeichnet, dass** der mittels der Einstelleinrichtung einstellbare Wert für das Deaktivierungs-Zeitintervall durch einen definierten Maximalwert, insbesondere in etwa 10 Sekunden, begrenzt ist, und/oder dass der mittels der Einstelleinrichtung einstellbare Wert für das Deaktivierungs-Zeitintervall (Δt) durch einen definierten Minimalwert, insbesondere in etwa 3 Sekunde, begrenzt ist.

5. Vorrichtung nach Anspruch 3, **dadurch gekennzeichnet,**
**dass** der Fahrer mittels der Tasten (15) die Deaktivierungs-Einrichtung (10) mittels des Bedienmenüs deaktivieren oder aktivieren kann.

6. Vorrichtung nach einem der vorhergehenden Ansprüche, **dadurch gekennzeichnet,**
**dass** eine durch den Fahrer, insbesondere manuell, betätigbare Betätigungseinrichtung, insbesondere eine Taste (11) und/oder ein Schalter, vorgesehen ist, mittels der die Deaktivierungs-Einrichtung (10) betätigbar ist, wobei bevorzugt vorgesehen ist, dass die Betätigungseinrichtung einem Lenkrad (7) des Fahrzeugs zugeordnet ist.

7. Verfahren zur Unterstützung eines Fahrers eines Fahrzeugs, insbesondere eines Nutzfahrzeugs, mit einer Vorrichtung nach einem der Ansprüche 1 bis 6, wobei der Fahrer die Einstelleinrichtung betätigt, um das Deaktivierungs-Zeitintervall (Δt) einzustellen.

8. Fahrzeug, insbesondere Nutzfahrzeug, mit einer Vorrichtung nach einem der Ansprüche 1 bis 6.

## Claims

1. A device for assisting a driver of a vehicle, in particular a utility vehicle, wherein a start-stop device (2) is provided, by means of which an internal combustion engine, which forms a drive device of the vehicle, can be automatically turned off when the travelling vehicle stops, wherein the start-stop device (2) has a starting device (3) which can be operated by the driver and by way of the operation of which the turned-off internal combustion engine can be restarted, wherein a deactivation device (10) which can be operated by the driver is provided, it being possible for the start-stop device (2) to be deactivated for a defined deactivation time interval (Δt) by way of the operation of the deactivation device, wherein the start-stop device (2) can be automatically reactivated once the deactivation time interval (Δt) has elapsed, **characterized in that** a setting device which can be operated by the driver is provided, it being possible for the deactivation time interval (Δt) to be set by the driver by means of the setting device.

2. The device according to Claim 1, **characterized in that** the deactivation time interval (Δt) lasts for approximately 3 to 10 seconds, in particular approximately 5 seconds.

3. The device according to Claim 1 or 2, **characterized in that** the setting device (13) is associated with buttons (15) on a steering wheel (7) of the vehicle, with which buttons the driver operates an operator control menu which is displayed on a screen (13) of the vehicle.

4. The device according to Claim 3, **characterized in that** the value for the deactivation time interval, which value can be set by means of the setting device, is limited by a defined maximum value, in particular approximately 10 seconds, and/or **in that** the value for the deactivation time interval (Δt), which value can be set by means of the setting device, is limited by a defined minimum value, in particular approximately 3 seconds.

5. The device according to Claim 3, **characterized in that** the driver can deactivate or activate the deactivation device (10) by means of the operator control menu using the buttons (15).

6. The device according to any of the preceding claims, **characterized in that** an operating device which can be, in particular manually, operated by the driver, in particular a button (11) and/or a switch, is provided, it being possible for the deactivation device (10) to be operated by means of the operating device, wherein provision is preferably made for the operating device to be associated with a steering wheel (7) of the vehicle.

7. A method for assisting a driver of a vehicle, in particular a utility vehicle, having a device according to any of Claims 1 to 6, wherein the driver operates the setting device in order to set the deactivation time interval (Δt).

8. A vehicle, in particular utility vehicle, having a device according to any of Claims 1 to 6.

## Revendications

1. Dispositif d'assistance au conducteur d'un véhicule, notamment d'un véhicule utilitaire, un module démarrage-arrêt (2) étant prévu au moyen duquel un moteur à combustion interne constituant un module d'entraînement du véhicule peut être arrêté automatiquement lorsque le véhicule en mouvement s'arrête, le module démarrage-arrêt (2) comportant un module de démarrage (3) qui peut être actionné par le conducteur et dont l'actionnement permet de redémarrer le moteur à combustion interne arrêté, un dispositif de désactivation (10) actionné par le conducteur étant prévu dont l'actionnement permet de désactiver le module démarrage-arrêt (2) pendant un intervalle de temps de désactivation défini (Δt), le module démarrage-arrêt (2) pouvant être réactivé automatiquement une fois l'intervalle de temps de désactivation (Δt) écoulé, **caractérisé en ce qu'**un module de réglage actionnable par le conducteur est prévu au moyen duquel l'intervalle de temps de désactivation (Δt) peut être réglé par le conducteur.

2. Dispositif selon la revendication 1, **caractérisé en ce que** l'intervalle de temps de désactivation (Δt) dure environ 3 à 10 secondes, notamment environ 5 secondes.

3. Dispositif selon la revendication 1 ou 2, **caractérisé en ce que** le module de réglage (13) est associé à des boutons (15) qui sont situés sur le volant (7) du véhicule et avec lesquels le conducteur actionne un menu de commande affiché sur un écran (13) du véhicule.

4. Dispositif selon la revendication 3, **caractérisé en ce que** la valeur de l'intervalle de temps de désactivation, réglable à l'aide du module de réglage, est limitée par une valeur maximale définie, notamment environ 10 secondes, et/ou **en ce que** la valeur de l'intervalle de temps de désactivation (Δt) réglable à l'aide du module de réglage est limitée par une valeur minimale définie, notamment environ 3 secondes.

5. Dispositif selon la revendication 3, **caractérisé en ce que** le conducteur peut désactiver ou activer le module de désactivation (10) à l'aide des boutons (15) du menu de commande.

6. Dispositif selon l'une des revendications précédentes, **caractérisé en ce qu'**un dispositif d'actionnement, notamment un bouton (11) et/ou un commutateur est prévu, qui peut être actionné par le conducteur, notamment manuellement, et au moyen duquel le module de désactivation (10) peut être actionné, le module d'actionnement étant de préférence prévu pour être associé au volant (7) du véhicule.

7. Procédé d'assistance à un conducteur d'un véhicule, notamment d'un véhicule utilitaire, comprenant un dispositif selon l'une des revendications 1 à 6, le conducteur actionnant le module de réglage afin de régler l'intervalle de temps de désactivation (Δt).

8. Véhicule, notamment véhicule utilitaire, comprenant un dispositif selon l'une des revendications 1 à 6.
